# EUROPÄISCHE PATENTSCHRIFT

(11) **EP 1 529 745 B1**
(45) Veröffentlichungstag und Bekanntmachung des Hinweises auf die Patenterteilung: **06.12.2006**
(21) Anmeldenummer: 04025469.0
(22) Anmeldetag: 27.10.2004
(51) Int. Cl.: B65G 47/84

(54) **Vorrichtung zum Zu- und Abführen von Behältern**
Device for supplying and discharging containers
Dispositif pour charger et décharger des conteneurs

(30) Priorität: 10.11.2003 DE 10352885
(43) Veröffentlichungstag der Anmeldung: 11.05.2005
(73) Patentinhaber: KHS AG, 44143 Dortmund (DE)
(72) Erfinder: Monzel, Alois, 67591 Mörstadt (DE)

(56) Entgegenhaltungen:
- EP-A- 0 629 569
- WO-A-96/08434
- GB-A- 1 043 868

## Beschreibung

Die Erfindung betrifft eine Vorrichtung zum Zu- und Abführen von Behältern, insbesondere zum Zuführen von Fässern, Dosen und dergl. von einem Förderband auf einen Linearförderer oder rotierenden Karusselldrehtisch oder auch zum Rückführen solcher Behälter auf ein abfördemdes Förderband mit einem Sternrad gemäß Oberbegriff des Anspruchs 1.

Solche Vorrichtungen werden beispielsweise bei Behälterbehandlungsmaschinen verwendet. Die Behälter werden der Behandlungsmaschine auf einem Förderband stehend und ausgerichtet zugeführt, wobei der Behälterein- bzw. -auslauf über je ein Sternrad erfolgt. Das Einlaufsternrad befördert die Behälter auf den Karusselldrehtisch der Maschine, und das Auslaufsternrad entnimmt die behandelten Behälter der Maschine und bewegt sie zurück auf das an diesem vorbeilaufenden abfördernde Förderband.

Vorrichtungen dieser Art finden aber auch für andere zylindrische Behälter und andere Maschinen, beispielsweise Abfüll- und Etikettiermaschinen, Inspektions- und Prüfmaschinen, Faßfüllmaschinen u. dgl. Verwendung. Dabei ist es üblich, für jeden Behälterdurchmesser einen eigenen Sternradsatz vorzusehen.

Es ist ferner bekannt, dass derartige Vorrichtungen zwei fest miteinander verbundene, koaxiale Sternräder aufweisen, deren eine Zahnflanken einen hinteren Anschlag für die zu führenden Behälter bilden, dass zwischen diesen Sternrädern ein mittleres, koaxiales Sternrad angeordnet ist, dessen den einen Zahnflanken gegenüberliegende Zahnflanken einen vorderen Anschlag für die Behälter bilden, und dass Mittel vorgesehen sind, um das mittlere Sternrad gegenüber dem Stemradpaar um einen Einstellwinkel darart zu verdrehen, dass die Vorrichtung an verschiedene Behälterdurchmesser anpassbar ist.

Eine entsprechende Vorrichtung wurde durch die EP 0 629 569 B 1 vorgestellt. Bei dieser Vorrichtung werden Behälter im Neckringverfahren an einem Transportstern aufgenommen. Um während des Transportes mit diesem Transportstern unerwünschte Bewegungen der Behälter zu vermeiden, sieht diese Schrift vor, im Bereich des Behälterkörpers zwei gegeneinander verstellbare, zahlreiche Ausnehmungen aufweisende Scheiben anzuordnen. Dadurch, dass diese Scheiben gegeneinander verstellbar sind, wird es ermöglicht, die Größe der sich ergebenden Aufnahmeöffnung an verschiedene Behälter anzupassen. Zur Verstellung der Scheiben gegeneinander schlägt die EP 0 629 569 B1 eine mechanisch, mittels eines Zahnrades und zweier an den Scheiben ausgebildeter Zahnsegmente arbeitende Verstellvorrichtung vor. Daran ist nachteilig, dass jede Verstellung der Vorrichtung einen manuellen Eingriff und somit eine Produktionsunterbrechung bedingt.

Ausgehend von einem solchen Stand der Technik liegt der Erfindung die Aufgabe zugrunde, eine für unterschiedliche Behälter geeignete Zu- und/oder Abführvorrichtung zu schaffen, bei welcher auf verstell- oder umstellbare Sternteile sowie gegeneinander verdrehbare Sterntaschenebenen verzichtet werden kann.

Diese Aufgaben wird bei einer Vorrichtung gemäß Oberbegriff des Anspruchs 1 dadurch gelöst, dass die schiebenden und zentrierenden Flanken des Sternrads selbsttätig antreibbar und in ihrer Rotationsposition auf die unterschiedlichen Behälterdurchmesser durch Drehverstellen in Bezug auf den Behältermittelpunkt zum jeweiligen Behältermanteldurchmesser und auf die entsprechende Position in der Maschine einstellbar sind.

Dabei wird in selbständiger Ausbildung femer vorgeschlagen, dass die schiebenden und/oder zentrierenden Flanken des Sternrads um den Teilbetrag des Mittelpunktversatzes der jeweiligen unterschiedlichen Behälterdurchmesser vor- oder nacheilend ansteuerbar und/oder in Schiebeposition verbringbar sind.

Mit dieser vorgeschlagenen Ausbildung ist bei einem eigenen Antrieb des Sternrades eine beliebige relative Positionsverstellung und damit eine individuelle Anpassung an unterschiedliche Behälterdurchmesser möglich, ohne dass mechanische oder sonstige Verstellungen zu dem zu- und/oder abführenden Sternrad erforderlich sind. Die Umstellung erfolgt mit der Einstellung auf die jeweils zu verarbeitende Behältergröße, wobei automatisch durch Synchron-, Servo-, Schritt- oder andere geeignete Antriebsmotoren und die entsprechenden Ansteuerungs-, und/oder Kontrollmodule wie z. B. Drehgeber, Steuerkarte, PCs, Software etc. eine winkel- und geschwindigkeitssynchrone Positionierung der Flanken des Sternrades bzw. des Sternrades selbst erfolgt und eine genaue Zuordnung der Behälter in der gewünschten Übergabestellung sichergestellt wird.

Im Nachfolgenden wird die Erfindung anhand eines vereinfachten Ausführungsbeispiels zur Übergabe eines Behälters in eine Behandlungsmaschine erläutert. Entsprechend analoge Betrachtungen ergeben die Verhältnisse und Abläufe bei der Übergabe eines solchen Behälters von der Behandlungsmaschine auf den ausgangsseitigen Abförderer.

Im Einzelnen zeigen die
- Figur 1: eine lineare Behandlungsmaschine und die
- Figur 2: einen Übergabestern in prismatischer Ausführung.

Die Vorrichtung zum Zu- und Abführen von Behältern besteht im Wesentlichen aus einem umlaufenden Sternrad 1 mit Aufnahmetaschen, Flanken 2 oder Prismen 8 in oder an denen der Außenmantel 3 eines Behälters während der Übergabe anliegt. Die Sterntaschen oder Flanken 2 sind vorzugsweise doppelt auf unterschiedlich hohen Ebenen mit einem entsprechenden Zwischenraum angeordnet und werden von einer eigenen und von dem Maschinenantrieb unabhängigen Antriebseinrichtung 5 betrieben. Hierzu können Synchron-, Schritt-, Servo- und andere geeignete Motore eingesetzt werden, die je nach Wahl geschwindigkeits, bzw. stellungs- und/oder winkelsynchron antreibbar und ansteuerbar sind.

Da die Vorrichtung durch mindestens einen eigenen Antriebsmotor angetrieben wird und nicht mechanisch mit den Antriebs- und/oder Drehbewegungen der eigentlichen Behälterbehandlungsmaschine verbunden ist, sind Mittel wie z. B. Drehgeber oder Positionsmelder usw. vorgesehen, welche eine teilungsgerechte Positionierung und einen ebensolchen Antrieb der Vorrichtung auch nach Betriebsunterbrechungen und/oder Stromausfall gewährleisten.

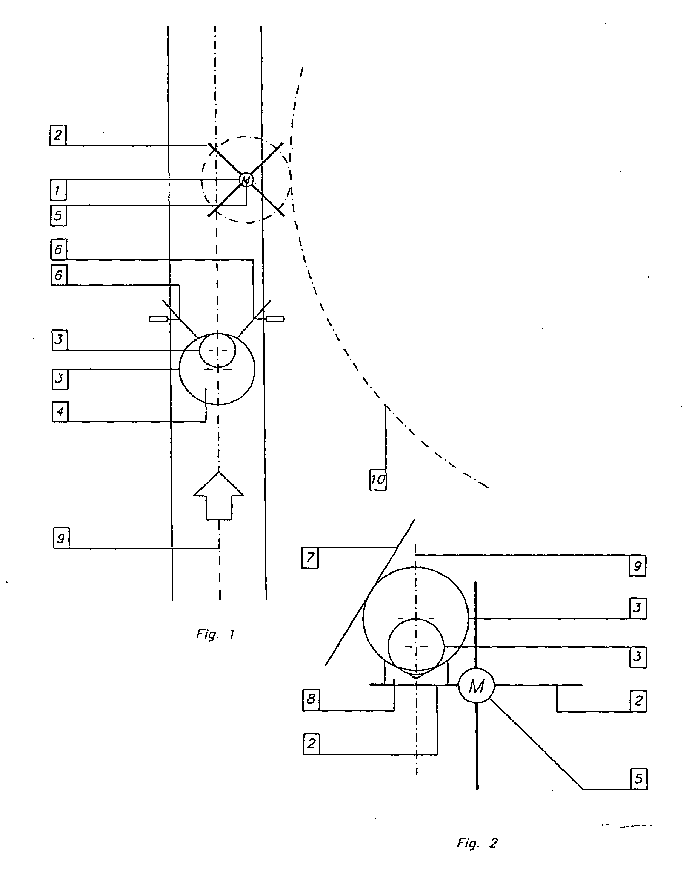

Die Arbeitsstellung bzw. Schiebestellung der Flanken oder Prismen ist jeweils auf die unterschiedlichen Behälterdurchmesser durch Drehverstellung in Bezug auf den Behälterdurchmesser zu seinem Mittelpunkt und der gewünschten Position des Behälters auf dem Standteller eines umlaufenden Karussels, einem Linearförderer oder der Behandlungsposition in der Maschine automatisch ansteuerbar. Die Umlaufbewegung des Sternrads bzw. der Flanken 2 oder Prismen 8 kann kontinuierlich, diskontinuierlich, schrittweise in unterschiedlichen Schritten beschleunigt und auch verzögert betrieben werden, wobei vorzugsweise im Übergabezeitpunkt gleiche Geschwindigkeiten zwischen Behälter 4 und der Fördergeschwindigkeit oder Umlaufgeschwindigkeit der Behandlungsmaschine zweckmäßig sind. Zwischen den beispielsweise auf Abstand angeordneten schiebenden oder zentrierenden Flanken 2 oder Prismen 8 sind je nach Behälterdurchmesser in entsprechender Endstellung einfahrbare Leitelemente 6 vorgesehen. Diese lenken den Behälter 4 bei nicht ordnungsgemäßer Mittelpunktstellung zum rotierenden Standteller oder zur gewünschten Behandlungsposition in die erforderliche Stellung. Solche Leitelemente 6 können bei in einer zentrierenden Spur oder auf Fördervorrichtungen mit Seitenführungen heranbewegten Behältern 4 und nachfolgender Prismenführung 8 entfallen. Je nach Rotationsgeschwindigkeit der Leitelemente 2 können zur Fixierung der Behälter 4 zusätzliche Andrück- oder Leitelemente 7 vorgesehen sein. Gemäß dem in Figur 2 dargestellten Ausführungsbeispiel ist die Flanke bzw. der Leitarm 2' mit einem Prisma 8 ausgestattet. Mit dieser Ausbildung können im Durchmesser unterschiedlich große Behälter immer mittenzentriert übergeben werden. In der Praxis stimmt die Prismamittelachse 9 mit dem Zentrum der Übernahmeebene, dem Aufnahmestandteller oder dgl. überein bzw. kann damit in Übereinstimmung gebracht werden. Das Prisma 8 kann an der Flanke bzw. dem Leitarm 2 zur Anpassung an unterschiedliche Mittenpositionen verschiebbar oder auch motorisch bewegbar gelagert sein. Bei Einsatz eines Prismas 8 sind zweckmäßig alle Leitarme oder Flanken, 2, 2' damit ausgestattet.

## Patentansprüche

1. Vorrichtung zum Zu- und Abführen von Behältern (4), insbesondere zum Zuführen von aufrechtstehenden Fässern, Dosen, Flaschen und dergleichen von einem Förderband auf einen Linearförderer oder rotierenden Karusselldrehtisch (10) oder auch zum Rückführen solcher Behälter auf ein abführendes Förderband mit einem Sternrad (1), dessen Sterntaschen oder deren Flanken (2, 2', 8), mindestens teilweise gegen den Behälter anlegbar und zur Aufnahme unterschiedlicher Behälter verstellbar ausgebildet sind, ***dadurch gekennzeichnet, dass*** die schiebenden und zentrierenden Flanken oder Prismen (2, 2', 8) des Sternrades (1) selbsttätig antreibbar und in ihrer Rotationsposition auf die unterschiedlichen Behälterdurchmesser durch Dreh-Verstellen in Bezug auf den Behältermittelpunkt zum Behältermanteldurchmesser und auf die erforderliche Position des Behälters (4) in der Maschine einstellbar sind.

2. Vorrichtung nach den vorhergehenden Ansprüchen, ***dadurch gekennzeichnet, dass*** die schiebenden und/oder zentrierenden Flanken oder Prismen (2, 2', 8) des Sternrads den Behältermittelpunkt auf den Mittelpunkt der Übernahmeebene einer linearen oder die Standteller einer rotierenden Behandlungsmaschine durch vor- oder nacheilende Überschubgeschwindigkeiten verbringen.

3. Vorrichtung nach den vorhergehenden Ansprüchen, ***dadurch gekennzeichnet, dass*** die Flanken oder Prismen (2, 2', 8) des Sternrades den Behältermittelpunkt auf den teilungsgerechten Mittelpunkt der Übernahme- oder Förderebene einer linearen Behandlungsmaschine verbringen.

4. Vorrichtung nach den vorhergehenden Ansprüchen, ***dadurch gekennzeichnet, dass*** mindestens das einlaufseitige Sternrad mit einem eigenen Motor (5) angetrieben und separat ansteuerbar und/oder einstellbar ist.

5. Vorrichtung nach Anspruch 4, ***dadurch gekennzeichnet, dass*** dieser Motor (5) sowohl synchron als auch relativ synchron und/oder schrittweise in Bezug auf die Bewegung der Arbeitsstationen der Behandlungsmaschine ansteuerbar ist.

6. Vorrichtung nach den vorhergehenden Ansprüchen, ***dadurch gekennzeichnet, dass*** die Sternarme und/oder Prismen (2, 2', 8) mit den Mittelpunktachsen der Behälter winkelsynchron oder stellungssynchron zu den Mittelpunktsachsen (9) der Übernahmeteller des Karusselldrehtisches (10) bzw. der linearen Behandlungsposition verbringbar ist.

7. Vorrichtung nach den vorhergehenden Ansprüchen, ***dadurch gekennzeichnet, dass*** im Übergabebereich ein die Behälter (4) in die mittige Position zum Zentrum der Standteller oder Übernahmeebene lenkendes Leitelement (6) vorgesehen ist.

8. Vorrichtung nach Anspruch 7, ***dadurch gekennzeichnet, dass*** die Position des Leitelements (6) automatisch in Abhängigkeit von der zu verarbeitenden Behältergröße einstellbar ist.

9. Vorrichtung nach den vorhergehenden Ansprüchen, ***dadurch gekennzeichnet, dass*** das Übergabesternrad als übergebendes und die Standteller oder Förderer als übernehmendes Förderelement und umgekehrt spätestens im Übergabepunkt gleiche Geschwindigkeiten aufweisen.

10. Vorrichtung nach den vorhergehenden Ansprüchen, ***dadurch gekennzeichnet, dass*** die Flanken bzw. Leitarme (2) in Form eines Prismas (8) zur Aufnahme unterschiedlich großer Behälter (4) ausgebildet sind.

11. Vorrichtung nach den vorhergehenden Ansprüchen, ***dadurch gekennzeichnet, dass*** die Prismamittelachse (9) mit dem Zentrum der Übernahmeebene übereinstimmt und/oder in Übereinstimmung bringbar ist.

12. Vorrichtung nach den vorhergehenden Ansprüchen, ***dadurch gekennzeichnet, dass*** das Prisma (8) an der Flanke bzw. dem Leitarm (2, 2') zur Anpassung an unterschiedliche Mittenpositionen verschiebbar oder motorisch bewegbar gelagert ist.

## Claims

1. Apparatus for the supplying and removing of containers (4), more especially for the supplying of upright kegs, cans or bottles and the like from a conveyor belt to a linear conveyor or a rotating carousel turntable (10) or also for the returning of such containers to an outlet conveyor belt with a star wheel (1), the star pockets of which or the faces (2, 2', 8) of which are configured so as to be brought into contact at least partially with the container and so as to be adjustable for the accommodation of different containers, **characterised in that** the pushing or centring faces or prisms (2, 2', 8) of the star wheel (1) are driveable independently and in their position of rotation are adjustable to the different container diameters by means of rotational adjustment with reference to the centre of the container relative to the diameter of the outer surface of the container and to the necessary position of the container (4) in the machine.

2. Apparatus according to the preceding claims, **characterised in that** the pushing and/or centring faces or prisms (2, 2', 8) of the star wheel move the centre of the container onto the centre of the receiving plane of a linear conveyor or the support plates of a rotating handling machine by advancing or retarding the feed speeds.

3. Apparatus according to the preceding claims, **characterised in that** the faces or prisms (2, 2', 8) of the star wheel move the centre of the container at the correct interval to the centre of the receiving or conveyor plane of a linear handling machine.

4. Apparatus according to the preceding claims, **characterised in that** at least the star wheel on the inlet side is driven by its own motor (5) and is separately actuatable and/or adjustable.

5. Apparatus according to claim 4, **characterised in that** the said motor (5) is actuatable both synchronously as well as relatively synchronously and/or step-wise in relation of the movement of the work stations of the handling machine.

6. Apparatus according to the preceding claims, **characterised in that** the star arms and/or prisms (2, 2', 8) can be moved so as to be synchronised in terms of angle or position with the centre axes of the container relative to the centre axes (9) of the receiving plates of the carousel turntable (10) or respectively of the linear handling position.

7. Apparatus according to the preceding claims, **characterised in that** a guide element (6) that steers the containers (4) into the centred position relative to the centre of the support plates or receiving plane is provided in the transfer region.

8. Apparatus according to claim 7, **characterised in that** the position of the guide element (6) can be set automatically in dependence on the size of the container to be processed.

9. Apparatus according to the preceding claims, **characterised in that** the transfer star wheel has the same speed as the transferring conveyor element and the support plates or conveyor have the same speed as the receiving conveyor element and vice-versa, not later than at the transfer point.

10. Apparatus according to the preceding claims, **characterised in that** the faces or respectively guide arms (2) are in the form of a prism (8) to accommodate containers (4) of different sizes.

11. Apparatus according to the preceding claims, **characterised in that** the centre axis (9) of the prism coincides with or is moveable to coincide with the centre of the receiving plane.

12. Apparatus according to the preceding claims, **characterised in that** prism (8) is mounted so as to be displaceable or moveable by a motor on the face or respectively on the guide arm (2, 2') to adapt to different centre positions.

## Revendications

1. Dispositif d'amenée et d'évacuation de récipients (4), en particulier pour amener des tonneaux, des boîtes, des bouteilles et similaires en station verticale d'une bande transporteuse sur un convoyeur linéaire ou sur une table rotative à carrousel (10) ou également pour réacheminer ces récipients sur une bande transporteuse d'évacuation équipée d'une roue en étoile (1), dont les compartiments ou dont les flancs (2, 2', 8) sont susceptibles de s'appuyer au moins partiellement contre le récipient et sont déplaçables pour recevoir des récipients différents, ***caractérisé en ce que*** les flancs ou prismes (2, 2', 8) pousseurs et centreurs de la roue en étoile (1) sont actionnables automatiquement et sont susceptibles d'être adaptés, dans leur position de rotation, aux différents diamètres de récipient par rotation-déplacement, par rapport au centre du récipient et au diamètre de l'enveloppe du récipient, et à la position requise du récipient (4) dans la machine.

2. Dispositif selon les revendications précédentes, ***caractérisé en ce que*** les flancs ou prismes (2, 2', 8) pousseurs et/ou centreurs de la roue en étoile déplacent le centre du récipient vers le centre du plan de prise en charge d'une machine de manipulation linéaire ou vers les plateaux d'une machine de manipulation rotative grâce à une vitesse de poussée provoquant une avance ou un retardement.

3. Dispositif selon les revendications précédentes, ***caractérisé en ce que*** les flancs ou prismes (2, 2', 8) de la roue en étoile déplacent le centre du récipient vers le centre, permettant une division, du plan de prise en charge ou de transport d'une machine de manipulation linéaire.

4. Dispositif selon les revendications précédentes, ***caractérisé en ce que*** la roue en étoile située du côté de l'entrée est entraînée par un moteur (5) qui lui est propre et peut être commandée et/ou réglée séparément.

5. Dispositif selon la revendication 4, ***caractérisé en ce que*** ce moteur (5) est susceptible d'être commandé aussi bien de façon synchrone que de façon relativement synchrone et/ou pas à pas, vis-à-vis du déplacement des postes de travail de la machine de manipulation.

6. Dispositif selon les revendications précédentes, ***caractérisé en ce que*** les bras de l'étoile et/ou les prismes (2, 2', 8) et les axes du centre des récipients sont susceptibles d'être placés en synchronie angulaire ou en synchronie de position par rapport aux axes centraux (9) des plateaux de prise en charge de la table rotative à carrousel (10) et/ou de la position de manipulation linéaire.

7. Dispositif selon les revendications précédentes, ***caractérisé en ce qu'**il* est prévu, dans la zone de transfert, un guide (6) qui place les récipients (4) en position médiane par rapport au centre des plateaux ou du plan de transfert.

8. Dispositif selon la revendication 7, ***caractérisé en ce que*** la position du guide (6) peut être réglée automatiquement en fonction de la dimension de récipient qu'il convient de traiter.

9. Dispositif selon les revendications précédentes, ***caractérisé en ce que*** la roue en étoile de transfert, en tant qu'organe de transfert, et les plateaux ou transporteurs, en tant qu'éléments de transport de prise en charge et inversement, présentent, au point de transfert, les mêmes vitesses.

10. Dispositif selon les revendications précédentes, ***caractérisé en ce que*** les flancs et/ou bras de guidage (2) se présentent sous la forme d'un prisme (8) destiné à recevoir des récipients (4) de différentes dimensions.

11. Dispositif selon les revendications précédentes, ***caractérisé en ce que*** l'axe médian du prisme (9) correspond au centre du plan de prise en charge et/ou peut être amené à correspondre avec lui.

12. Dispositif selon les revendications précédentes, ***caractérisé en ce que*** le prisme (8) présent sur le flanc et/ou le bras de guidage (2, 2') est monté coulissant ou déplaçable à l'aide d'un moteur, afin de l'adapter à différentes positions médianes.
